# EUROPÄISCHE PATENTSCHRIFT

(11) **EP 4 011 192 B1**
(45) Veröffentlichungstag und Bekanntmachung des Hinweises auf die Patenterteilung: **15.05.2024**
(21) Anmeldenummer: 21212074.5
(22) Anmeldetag: 02.12.2021
(51) Int. Cl.: A01D 43/10, A01D 57/20, A01D 84/02

(54) **ERNTEVORRICHTUNG**
HARVESTING DEVICE
DISPOSITIF DE RÉCOLTE

(30) Priorität: 14.12.2020 DE 102020133430
(43) Veröffentlichungstag der Anmeldung: 15.06.2022
(73) Patentinhaber: CLAAS Saulgau GmbH, 88348 Bad Saulgau (DE)
(72) Erfinder: Ober, Martin, 78736 Epfendorf-Trichtingen (DE); Schneider, Bernd, 72511 Hornstein (DE); Berger, Matthias, 88284 Wolpertswende (DE); Scham, Raphael, 88356 Ostrach (DE); Schäffer, Mathias, 88525 Dürmentingen (DE)

(56) Entgegenhaltungen:
- EP-B1- 1 776 859
- DE-A1-102010 010 862
- US-A1- 2011 302 897

## Beschreibung

Die Erfindung betrifft eine Erntevorrichtung einer landwirtschaftlichen Erntemaschine nach dem Oberbegriff des Patentanspruchs 1. Des Weiteren betrifft die Erfindung eine landwirtschaftliche Erntemaschine.

Aus der DE 10 2005 050 157 A1 ist eine landwirtschaftliche Erntemaschine bekannt, die ein landwirtschaftliches Zugfahrzeug und mehrere an das landwirtschaftliche Zugfahrzeug angebaute Erntevorrichtungen umfasst. Bei den Erntevorrichtungen handelt es sich um Mähvorrichtungen. Aus der DE 10 2005 050 157 A1 ist es bekannt, dass eine als Mähvorrichtung ausgebildete Erntevorrichtung über ein Mähwerk zum Mähen von Erntegut, über eine dem Mähwerk nachgeordnete Konditioniereinrichtung zum Konditionieren des Ernteguts und über eine der Konditioniereinrichtung nachgeordnete Querfördereinrichtung zum Fördern des konditionierten Ernteguts verfügt. Ferner ist es bekannt, dass eine Mähvorrichtung über ein Leitelement verfügt, um das von der Konditioniereinrichtung konditionierte Erntegut von der Konditioniereinrichtung an die Querfördereinrichtung definiert zu überführen. Bei diesem Leitelement kann es sich um ein Metallblech, eine Schürze, eine Matte oder auch um eine Stäbeanordnung handeln.

Aus der EP 1 106 051 B1 ist eine weitere landwirtschaftliche Erntemaschine mit einem Zugfahrzeug und mit an das Zugfahrzeug angekoppelten Erntevorrichtungen bekannt. Die Erntevorrichtungen verfügen über Querfördereinrichtungen, die schräggestellt sind, und zwar derart, dass dieselben sich in Förderrichtung der Querfördereinrichtung gesehen schräg nach hinten erstrecken.

DE 10 2010 010 862 A1 offenbart eine Heuwerbungsmaschine zum Schwaden und/oder Querversetzen von Erntegut mit einer Aufsammelvorrichtung, einem Zwischenförderer, einer beweglich angeordneten Förderkanal- Außenwand und einem Querförderer.

Aus EP 1 776 859 B1 ist eine Erntemaschine bekannt mit zumindest einem Mähwerk, einem dem Mähwerk nachgeordneten Konditionierer, einem dem Konditionierer nachgeordneten Querförderer zum Ablegen des konditionierten Ernteguts in einen seitlichen Schwad sowie einem Auswurfleitblech, um den von der Umlenkwalze ausgeworfenen Erntegutstrom besser zu kanalisieren und an die gewünschte Stelle zu lenken.

Insbesondere dann, wenn sich die Menge bzw. die Masse des Erntegutstroms, die von der Konditioniereinrichtung an die Querfördereinrichtung zu überführen ist, ändert, kann es bei aus der Praxis bekannten Erntevorrichtungen zu einem unterbrochenen oder ungleichmäßigen Gutfluss kommen. Dies ist von Nachteil.

Hiervon ausgehend liegt der vorliegenden Erfindung die Aufgabe zugrunde, eine neuartige Erntevorrichtung und eine landwirtschaftliche Erntemaschine zu schaffen.

Diese Aufgabe wird durch eine Erntevorrichtung nach Anspruch 1 gelöst.

Erfindungsgemäß ist das Leitelement auslenkbar ausgebildet, derart, dass das Leitelement eine von einem von der Konditioniereinrichtung an die Querfördereinrichtung zu übergebenden Erntegutmassestrom abhängige Position einnimmt. Die erfindungsgemäße Erntevorrichtung verfügt über das auslenkbare Leitelement. Das Leitelement ist abhängig vom Erntegutmassenstrom auslenkbar. Hiermit kann das Erntegut stets definiert von der Konditioniereinrichtung an die Querfördereinrichtung überführt werden. Ein unterbrochener oder ungleichmäßiger Gutflussstrom kann so effektiv verhindert werden.

Das Leitelement nimmt bei Vorliegen eines relativ geringen Erntegutmassestroms eine erste Position ein, wohingegen bei Vorliegen eines relativ großen Erntegutmassestroms das Leitelement eine gegenüber der ersten Position ausgelenkte Position einnimmt. Hiermit kann das Erntegut stets definiert von der Konditioniereinrichtung an die Querfördereinrichtung überführt werden. Ein unterbrochener oder ungleichmäßiger Gutflussstrom kann verhindert werden. Ebenso kann vorteilhaft verhindert werden, dass das Erntegut gegen die Rückwand des Querförderers geworfen wird.

Das Leitelement weist ein flexibles Tuch oder eine flexible Matte auf. Nach einer vorteilhaften Weiterbildung weist das Leitelement eine schwenkbare Klappe auf. Vorzugsweise ist das flexible Tuch oder die flexible Matte an der schwenkbaren Klappe befestigt, um eine Grundstellung oder Ausgangsstellung des Tuches bzw. der Matte verändern bzw. verstellen zu können. Diese Ausführung ist bevorzugt, um einem sich ändernden Erntegutmassestrom Rechnung zu tragen und das Erntegut mit hoher Qualität ausgehend von der Konditioniereinrichtung an die Querfördereinrichtung zu überführen.

Es kann auch eine frei schwenkbare Klappe vorgesehen werden, die vorzugsweise entgegen der Federkraft eines Federelements auslenkbar ist, insbesondere abhängig vom Erntegutmassestroms passiv gesteuert ist. Bei einer aktiven Steuerung der Klappe wird der Erntegutmassenstrom messtechnisch erfasst und abhängig hiervon die Klappe aktiv gesteuert.

Nach einer vorteilhaften Weiterbildung ist das Leitelement derart ausgebildet, dass ein Auswurfkanal in Förderrichtung der Querfördereinrichtung gesehen nach oben und/oder nach hinten vorzugsweise konisch vergrößert ist. Hiermit kann die Überführung des konditionierten Ernteguts von der Konditioniereinrichtung an die Querfördereinrichtung weiter verbessert werden.

Nach einer vorteilhaften Weiterbildung ist das Leitelement derart ausgebildet, dass in Förderrichtung der Querfördereinrichtung gesehen das Leitelement länger ist und gegenüber der Querfördereinrichtung vorsteht. Diese Weiterbildung dient der Verbesserung der Abgabe des Ernteguts von der Querfördereinrichtung.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Seitenansicht einer Erntevorrichtung;
- Fig. 2: eine perspektivische Ansicht der Erntevorrichtung;
- Fig. 3: eine Visualisierung der Steifigkeit des Tuches bzw. der Matte.

Die Erfindung betrifft eine Erntevorrichtung einer landwirtschaftlichen Erntemaschine.

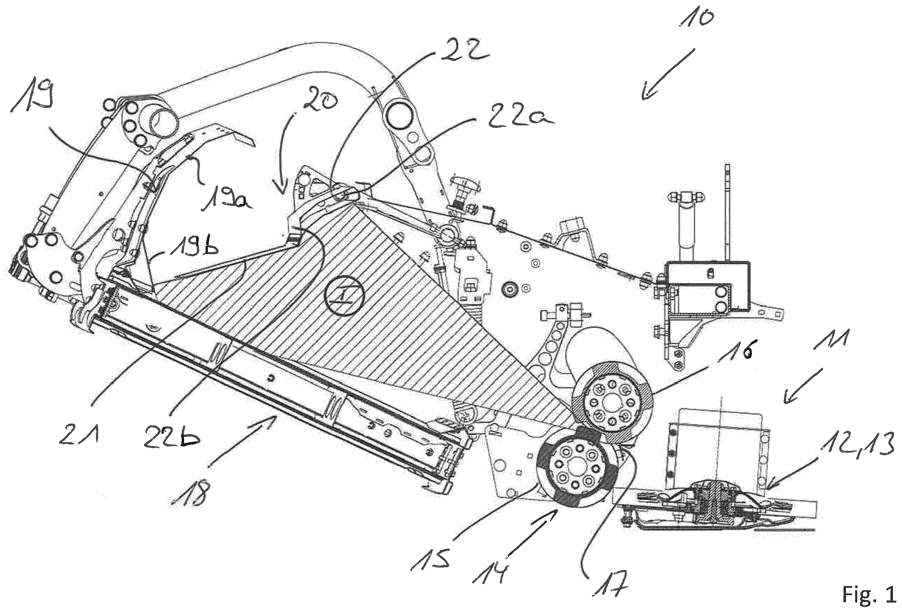

Fig. 1 zeigt eine Seitenansicht einer erfindungsgemäßen Erntevorrichtung 10 einer landwirtschaftlichen Erntemaschine. Die Erntevorrichtung 10 verfügt über ein Mähwerk 11 bestehend aus mehreren Mähorganen 12, die unter Ausbildung eines Mähbalkens 13 nebeneinander positioniert sind. Das Mähwerk 11 dient dem Mähen von Erntegut.

Die Erntevorrichtung 10 verfügt weiterhin über eine dem Mähwerk 11 in Förderrichtung des Ernteguts gesehen nachgeordnete Konditioniereinrichtung 14. Die Konditioniereinrichtung 14 verfügt über Konditionierwalzen 15 und 16, die einen Spalt 17 definieren, durch welchen das von dem Mähwerk 11 gemähte Erntegut zur Konditionierung hindurch zu fördern ist.

Die Erntevorrichtung 10 verfügt weiterhin über eine der Konditioniereinrichtung 14 nachgeordnete Querfördereinrichtung 18. Bei der Querfördereinrichtung 18 handelt es sich vorzugsweise um einen umlaufenden Bandförderer, welcher das gemähte und konditionierte Erntegut quer zum Mähwerk 11 sowie quer zur Konditioniereinrichtung 14 transportiert.

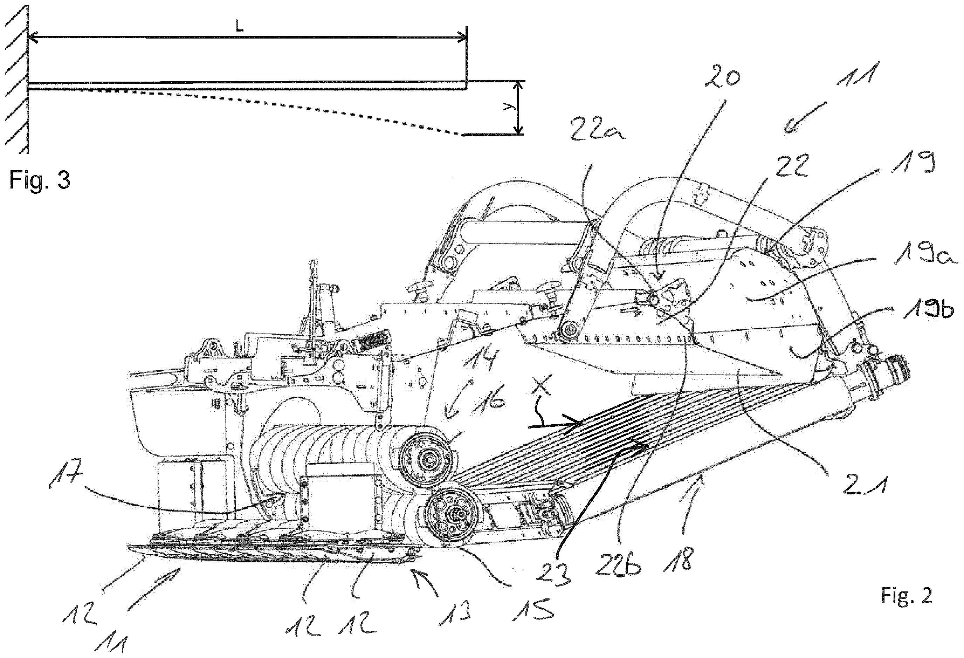

In Fig. 2 ist die Förderrichtung der Querfördereinrichtung 18 mit einem Pfeil X visualisiert.

Auf einer von der Konditioniereinrichtung 14 abgewandten Seite der Querfördereinrichtung 18 ist eine Rückwand 19 angeordnet. Diese Rückwand 19 verfügt im Wesentlichen über zwei Abschnitte, nämlich einen oberen Abschnitt 19a und einen unteren Abschnitt 19b, der zwischen dem oberen Abschnitt 19a und der Querfördereinrichtung 18 angeordnet ist.

In Fig. 1 visualisiert ein schraffierter Bereich I einen trichterartigen Auswurfbereich der Konditioniereinrichtung 14, in welchem die Konditioniereinrichtung 14 das gemähte und konditionierte Erntegut auswirft und an die Querfördereinrichtung 18 übergibt.

Die Erntevorrichtung 18 verfügt weiterhin über ein Leitelement 20. Das Leitelement 20 dient der Führung und Überführung des konditionierten Ernteguts von der Konditioniereinrichtung 14 an die Querfördereinrichtung 18.

Das Leitelement 20 der erfindungsgemäßen Erntevorrichtung 10 ist auslenkbar ausgebildet.

Das Leitelement 20 nimmt eine von einem von der Konditioniereinrichtung 15 an die Querfördereinrichtung 18 zu übergebenden Erntegutmassestrom abhängige Position ein.

Insbesondere nimmt das Leitelement 20 bei Vorliegen eines relativ geringen Erntegutmassestroms eine erste Position ein, die in Fig. 1 und 2 gezeigt ist. Bei Vorliegen eines relativ großen Erntegutmassestroms nimmt das Leitelement 20 eine andere bzw. zweite Position ein, die gegenüber der ersten Position ausgelenkt ist.

Unter einem relativ geringen Erntegutmassestrom soll ein Erntegutmassestrom verstanden werden, der kleiner als ein erster Grenzwert ist. Unter einem relativ großen Erntegutmassestrom soll ein Erntegutmassestrom verstanden werden der größer als ein zweiter Grenzwert ist. Vorzugsweise entspricht der erste Grenzwert dem zweiten Grenzwert. Relativ geringe Erntegutmasseströme ergeben sich beispielsweise bei Gras oder Luzernen mit Aufwuchs-Höhen von bis zu etwa 20 Zentimetern.

Das Leitelement 20 kann abhängig vom Erntegutmassestrom mehrere unterschiedliche Positionen einnehmen, und zwar kontinuierlich zwischen zwei Endpositionen des Leitelements 20 oder diskret definierte Zwischenpositionen zwischen den beiden Endpositionen des Leitelements 20.

Das Leitelement 20 kann ein flexibles Tuch 21 bzw. eine flexible Matte und/oder eine schwenkbare Klappe 22 aufweisen.

Im gezeigten Ausführungsbeispiel verfügt das Leitelement 20 sowohl über ein flexibles Tuch 21 als auch über eine schwenkbare Klappe 22, wobei die schwenkbare Klappe 22 um eine Schwenkachse 22a schwenkbar ist, und wobei das flexible Tuch 21 an einem von der Schwenkachse 22a beabstandeten Abschnitt 22b der Klappe 22 an der Klappe 22 befestigt ist.

Abhängig vom Erntegutmassestrom, der von der Konditioniereinrichtung 14 an die Querfördereinrichtung 18 zu übergeben ist, kann das flexible Tuch 21 ausgelenkt werden. Die Klappe 22 kann abhängig von der Größe des Erntegutmassestroms um die Schwenkachse 22a verschwenkt werden, um eine Grundstellung oder Ausgangsstellung des Tuches 21 verändern zu können. Zum Einstellen der Grund- oder Ausgangsstellung kann eine Arretierung der Klappe 22 gelöst werden und nach der Justierung wird die Klappe 22 für den Betrieb bzw. den Erntevorgang wieder fixiert.

Vorzugsweise sind in das flexible Tuch 21 bzw. in die flexible Matte Stäbe integriert, die sich ausgehend vom Abschnitt 22b der Klappe 22 gesehen in Richtung auf ein von der Klappe 22 abgewandtes Ende des flexiblen Tuchs 21 erstrecken.

Dann, wenn ein relativ großer Erntegutmassestrom von der Konditioniereinrichtung 14 an die Querfördereinrichtung 18 zu übergeben ist, ist das Leitelement 20 auslenkbar, wobei hierbei auch das flexible Tuch 21 bzw. die flexible Matte ausgelenkt wird. Insbesondere dadurch, dass in Fig. 1 die Klappe 22 aus der in Fig. 1 gezeigten Position nach oben ausgelenkt wird, nämlich nach oben verschwenkt wird, kann die Grund- bzw. Ausgangsstellung des Tuchs 21 oder der Matte an den größeren Erntegutmassestrom angepasst werden.

Es kann vorgesehen sein, dass das Leitelement 20 passiv abhängig vom Erntegutmassestrom ausgelenkt wird. Alternativ kann das Leitelement 20 abhängig vom Erntegutmassestrom aktiv ausgelenkt werden, wozu dann vorzugsweise der Erntegutmassestrom messtechnisch erfasst wird und abhängig hiervon ein Aktuator angesteuert wird, der dann das Leitelement 20 aktiv auslenkt. Hierbei wird vorzugsweise die Kappe 22 aktiv verschwenkt und so ausgelenkt.

Bei der passiven Auslenkung ist die schwenkbare Klappe 22 vorzugsweise entgegen der Federkraft eines nicht gezeigten Federelements aus der in Fig. 1 gezeigten ersten Position heraus verlagerbar. Das Federelement drückt die Klappe 22 in die erste Position.

Nach einer vorteilhaften Weiterbildung ist das Leitelement 20 derart ausgebildet, dass bereits dann, wenn dasselbe die erste Position der Fig. 1, 2 einnimmt, und auch dann, wenn das Leitelement 20 aus der ersten Position heraus ausgelenkt ist, ein von dem Leitelement 20 definierter Auswurfkanal 23 (siehe Fig. 2) in Förderrichtung X der Querfördereinrichtung 18 gesehen nach oben vergrößert und/oder nach hinten in Richtung auf die Rückwand 19 vergrößert. Hiermit wird dem Umstand Rechnung getragen, dass in Förderrichtung X der Querfördereinrichtung 18 gesehen zunehmend mehr Erntegut von der Querfördereinrichtung 18 gefördert werden muss.

Damit das flexible Tuch 21 bzw. die flexible Matte dem ankommenden Erntegutmassestrom einen ausreichenden Widerstand entgegensetzen kann, muss es eine bestimmte vorgegebene Steifigkeit aufweisen, die von der Einspannstelle zum freien Ende hin verläuft.

Die Fig. 3 visualisiert die Steifigkeit des Tuches 21 bzw. der Matte. Das Tuch 21 bzw. die Matte ist dazu an einem Ende fest eingespannt - vergleichbar mit der Klemmung an der Klappe 22 - und kragt waagerecht von der Einspannstelle weg. Ein für die erfindungsgemäße Erntevorrichtung geeignetes Tuch oder eine Matte darf bei einer solchen Einspannung und einer waagerechten Kraglänge L von 200 Millimetern unter seinem bzw. ihrem Eigengewicht bei etwa 20 Grad Celsius Umgebungstemperatur eine Auslenkung y von maximal 100 Millimetern aufweisen.

Bei einer frei schwenkbaren Klappe, die entgegen der Federkraft eines Federelements auslenkbar ist, weist das Federelement eine entsprechende Federkennlinie auf.

Alternativ kann die frei schwenkbare Klappe alleine durch ihr Eigengewicht dem Erntegutmassestrom einen Widerstand entgegensetzen. Dabei vergrößert sich die Widerstandskraft mit zunehmender Auslenkung der Klappe, da die Gewichtskraft einen vergrößerten Hebelarm erhält. Die Klappe könnte durch ein biegeweiches Tuch oder eine Matte ersetzt werden, an dessen oder deren unterem Ende ein Gewicht angebracht ist.

Alternativ oder zusätzlich ist das Leitelement 20 derart ausgebildet, dass in Förderrichtung X der Querfördereinrichtung 18 gesehen das Leitelement 20 gegenüber der Querfördereinrichtung 18 und vorzugsweise auch der Rückwand 19 vorsteht. So wird das Abwerfen des Ernteguts von der Querfördereinrichtung 18 unter Ausbildung eines Schwads verbessert.

Die Querfördereinrichtung 18 ist vorzugsweise schräggestellt. Eine erste Schrägstellung kann derart ausgeführt sein, dass, wie am besten Fig. 1 entnommen werden kann, sich die Querfördereinrichtung 18 ausgehend von der Konditioniereinrichtung 14 gesehen nach hinten und oben erstreckt. Zusätzlich oder alternativ kann eine zweite Schrägstellung so vorgesehen sein, dass die Querfördereinrichtung 18 in Förderrichtung X der Querfördereinrichtung 18 gesehen sich nach hinten erstreckt. D. h. die Querfördereinrichtung 18 weist an ihrem Abgabeende bzw. Abwurfende einen größeren Abstand zur Konditioniereinrichtung 14 auf als an ihrem anderen Ende, wo die Förderstrecke beginnt.

Die Erfindung betrifft weiterhin eine landwirtschaftliche Erntemaschine. Eine solche Erntemaschine verfügt über ein landwirtschaftliches Zugfahrzeug und mindestens eine an das Zugfahrzeug gekoppelte, erfindungsgemäße Erntevorrichtung.

Typischerweise sind an ein landwirtschaftliches Zugfahrzeug in einem Heckbereich desselben zwei erfindungsgemäße Erntevorrichtungen gekoppelt, deren Querfördereinrichtungen Fördereinrichtungen aufweisen, die aufeinander zu gerichtet sind, sodass das Erntegut in einem Bereich zwischen den Erntevorrichtungen in einem sogenannten Mittenschwad abgelegt werden kann.

### Bezugszeichenliste

- 10: Erntevorrichtung
- 11: Mähwerk
- 12: Mähorgan
- 13: Mähbalken
- 14: Konditioniereinrichtung
- 15: Konditionierwalze
- 16: Konditionierwalze
- 17: Spalt
- 18: Querfördereinrichtung
- 19: Rückwand
- 19a: Abschnitt
- 19b: Abschnitt
- 20: Leitelement
- 21: Tuch
- 22: Klappe
- 22a: Schwenkachse
- 22b: Abschnitt
- 23: Auswurfkanal
- L: Kraglänge
- y: Auslenkung

## Patentansprüche

1. Erntevorrichtung (10) einer landwirtschaftlichen Erntemaschine,
mit einem Mähwerk (11) zum Mähen von Erntegut,
mit einer dem Mähwerk (11) nachgeordneten Konditioniereinrichtung (14) mit Konditionierwalzen (15, 16) zum Konditionieren des gemähten Ernteguts,
mit einer der Konditioniereinrichtung (14) nachgeordneten Querfördereinrichtung (18) zum Fördern des konditionierten Ernteguts,
mit einem Leitelement (20), um das konditionierte Erntegut von der Konditioniereinrichtung (15) an die Querfördereinrichtung (18) zu überführen,
**dadurch gekennzeichnet, dass**
das Leitelement (20) auslenkbar ausgebildet ist und ein flexibles Tuch (21) oder eine flexible Matte aufweist, welche eine vorgegebene Steifigkeit aufweisen, die von der Einspannstelle zum freien Ende hin verläuft und bei einer waagerechten Kraglänge (L) von 200 Millimetern unter seinem bzw. ihrem Eigengewicht bei etwa 20 Grad Celsius Umgebungstemperatur eine Auslenkung in vertikaler Richtung (y) von maximal 100 Millimetern aufweisen, derart, dass das Leitelement (20) eine von einem von der Konditioniereinrichtung (15) an die Querfördereinrichtung (18) zu übergebenden Erntegutmassestrom abhängige Position einnimmt, wobei das Leitelement (20) bei Vorliegen eines Erntegutmassestroms, der kleiner als ein erster Grenzwert ist, eine erste Position einnimmt, wohingegen bei Vorliegen eines Erntegutmassestroms, der größer als ein zweiter Grenzwert ist, das Leitelement (20) eine gegenüber der ersten Position ausgelenkte Position einnimmt, wobei das Leitelement (20) abhängig vom Erntegutmassestrom mehrere unterschiedliche Positionen kontinuierlich zwischen den zwei Endpositionen einnehmen kann.

2. Erntevorrichtung nach Anspruch 1, **dadurch gekennzeichnet, dass** das Leitelement (20) eine schwenkbare Klappe (22) aufweist.

3. Erntevorrichtung nach Anspruch 1 und 2, **dadurch gekennzeichnet, dass** das flexible Tuch (21) oder die flexible Matte an der schwenkbaren Klappe (22) befestigt ist.

4. Erntevorrichtung nach Anspruch 2 oder 3, **dadurch gekennzeichnet, dass** die schwenkbare Klappe (22) abhängig vom Erntegutmassestrom aktiv gesteuert auslenkbar ist.

5. Erntevorrichtung nach einem der Ansprüche 2 bis 4, **dadurch gekennzeichnet, dass** die schwenkbare Klappe (22) entgegen der Federkraft eines Federelements auslenkbar ist.

6. Erntevorrichtung nach einem der Ansprüche 1 bis 5, **dadurch gekennzeichnet, dass** das Leitelement (20) derart ausgebildet ist, dass ein Auswurfkanal (23) in Förderrichtung der Querfördereinrichtung (18) gesehen nach oben vergrößert ist.

7. Erntevorrichtung nach einem der Ansprüche 1 bis 6, **dadurch gekennzeichnet, dass** das Leitelement (20) derart ausgebildet ist, dass ein Auswurfkanal (23) nach hinten vergrößert ist.

8. Erntevorrichtung nach einem der Ansprüche 1 bis 7, **dadurch gekennzeichnet, dass** das Leitelement (20) derart ausgebildet ist, dass in Förderrichtung der Querfördereinrichtung (18) gesehen das Leitelement (20) gegenüber der Querfördereinrichtung (18) vorsteht.

9. Erntevorrichtung nach einem der Ansprüche 1 bis 8, **dadurch gekennzeichnet, dass** die Querfördereinrichtung (18) derart schräggestellt ist, dass sich dieselbe von der Konditioniereinrichtung (14) aus gesehen nach hinten und nach oben erstreckt.

10. Erntevorrichtung nach einem der Ansprüche 1 bis 9, **dadurch gekennzeichnet, dass** die Querfördereinrichtung (18) derart schräggestellt ist, dass sich dieselbe in Förderrichtung der Querfördereinrichtung (18) gesehen nach hinten erstreckt.

11. Landwirtschaftliche Erntemaschine,
mit Zugfahrzeug,
mit mindestens einer Erntevorrichtung (10) nach einem der Ansprüche 1 bis 10, die an das Zugfahrzeug gekoppelt ist.

## Claims

1. Harvesting device (10) for an agricultural harvesting machine,
having a mower (11) for mowing harvested crops,
having a conditioning apparatus (14) which has conditioning rollers (15, 16) for conditioning the mown harvested crops and is arranged downstream of the mower (11) ,
having a transverse conveying apparatus (18) arranged downstream of the conditioning apparatus (14) for conveying the conditioned harvested crops,
having a guide element (20) in order to transfer the conditioned harvested crops from the conditioning apparatus (14) onto the transverse conveying apparatus (18),
**characterized in that**
the guide element (20) is configured to be deflectable and comprises a flexible cloth (21) or a flexible mat which has a predefined stiffness extending from the clamping point to the free end and has a deflection in the vertical direction (y) of at most 100 millimetres given a horizontal protruding length (L) of 200 millimetres under its own weight at an ambient temperature of approximately 20 degrees Celsius, such that the guide element (20) adopts a position depending on a harvested crop mass flow to be transferred from the conditioning apparatus (14) onto the transverse conveying apparatus (18), wherein the guide element (20) adopts a first position when a harvested crop mass flow is less than a first threshold value, whereas the guide element (20) adopts a deflected position relative to the first position when a harvested crop mass flow is greater than a second threshold value, wherein the guide element (20) can continuously adopt multiple different positions between the two end positions depending on the harvested crop mass flow.

2. Harvesting device according to Claim 1, **characterized in that** the guide element (20) has a pivotable flap (22).

3. Harvesting device according to Claims 1 and 2, **characterized in that** the flexible cloth (21) or the flexible mat is fastened to the pivotable flap (22).

4. Harvesting device according to Claim 2 or 3, **characterized in that** the pivotable flap (22) is deflectable with active control depending on the harvested crop mass flow.

5. Harvesting device according to one of Claims 2 to 4, **characterized in that** the pivotable flap (22) is deflectable counter to the spring force of a spring element.

6. Harvesting device according to one of Claims 1 to 5, **characterized in that** the guide element (20) is configured such that an ejection channel (23) is enlarged upwardly, as viewed in the conveying direction of the transverse conveying apparatus (18).

7. Harvesting device according to one of Claims 1 to 6, **characterized in that** the guide element (20) is configured such that an ejection channel (23) is enlarged to the rear.

8. Harvesting device according to one of Claims 1 to 7, **characterized in that** the guide element (20) is configured such that the guide element (20) protrudes relative to the transverse conveying apparatus (18), when viewed in the conveying direction of the transverse conveying apparatus (18).

9. Harvesting device according to one of Claims 1 to 8, **characterized in that** the transverse conveying apparatus (18) is inclined such that said transverse conveying apparatus extends to the rear and upwardly, when viewed from the conditioning apparatus (14).

10. Harvesting device according to one of Claims 1 to 9, **characterized in that** the transverse conveying apparatus (18) is inclined such that said transverse conveying apparatus extends to the rear, when viewed in the conveying direction of the transverse conveying apparatus (18).

11. Agricultural harvesting machine,
having a towing vehicle,
having at least one harvesting device (10) according to one of Claims 1 to 10 which is coupled to the towing vehicle.

## Revendications

1. Dispositif de récolte (10) d'une machine de récolte agricole,
avec un mécanisme de fauchage (11) pour faucher le produit de récolte,
avec un appareil de conditionnement (14) agencé en aval du mécanisme de fauchage (11) avec des rouleaux de conditionnement (15, 16) pour conditionner le produit de récolte fauché,
avec un appareil de transport transversal (18) agencé en aval de l'appareil de conditionnement (14) pour transporter le produit de récolte conditionné,
avec un élément de guidage (20) afin de transférer le produit de récolte conditionné de l'appareil de conditionnement (14) à l'appareil de transport transversal (18),
**caractérisé en ce que**
l'élément de guidage (20) est réalisé de manière à pouvoir être dévié et présente une toile flexible (21) ou un tapis flexible qui présente une rigidité prédéfinie, qui s'étend du point de montage vers l'extrémité libre et qui, pour une longueur de saillie horizontale (L) de 200 millimètres, présente sous son poids propre une déviation dans la direction verticale (y) de 100 millimètres au maximum à une température ambiante d'environ 20 degrés Celsius, de telle sorte que l'élément de guidage (20) prend une position dépendant d'un flux de masse de produit de récolte à transférer de l'appareil de conditionnement (14) à l'appareil de transport transversal (18), l'élément de guidage (20) prenant, en présence d'un flux de masse de produit de récolte inférieur à une première valeur limite, une première position, tandis qu'en présence d'un flux de masse de produit de récolte supérieur à une deuxième valeur limite, l'élément de guidage (20) prend une position déviée par rapport à la première position, l'élément de guidage (20) pouvant prendre plusieurs positions différentes en fonction du flux de masse de produit de récolte, de manière continue entre les deux positions d'extrémité.

2. Dispositif de récolte selon la revendication 1, **caractérisé en ce que** l'élément de guidage (20) présente un volet pivotant (22).

3. Dispositif de récolte selon les revendications 1 et 2, **caractérisé en ce que** la toile flexible (21) ou le tapis flexible est fixé au volet pivotant (22).

4. Dispositif de récolte selon la revendication 2 ou 3, **caractérisé en ce que** le volet pivotant (22) peut être dévié en étant commandé de manière active en fonction du flux de masse de produit de récolte.

5. Dispositif de récolte selon l'une quelconque des revendications 2 à 4, **caractérisé en ce que** le volet pivotant (22) peut être dévié à l'encontre de la force élastique d'un élément à ressort.

6. Dispositif de récolte selon l'une quelconque des revendications 1 à 5, **caractérisé en ce que** l'élément de guidage (20) est réalisé de telle sorte qu'un canal d'éjection (23) est agrandi vers le haut, vu dans la direction de transport de l'appareil de transport transversal (18).

7. Dispositif de récolte selon l'une quelconque des revendications 1 à 6, **caractérisé en ce que** l'élément de guidage (20) est réalisé de telle sorte qu'un canal d'éjection (23) est agrandi vers l'arrière.

8. Dispositif de récolte selon l'une quelconque des revendications 1 à 7, **caractérisé en ce que** l'élément de guidage (20) est configuré de telle sorte que, vu dans la direction de transport de l'appareil de transport transversal (18), l'élément de guidage (20) fait saillie par rapport à l'appareil de transport transversal (18).

9. Dispositif de récolte selon l'une quelconque des revendications 1 à 8, **caractérisé en ce que** l'appareil de transport transversal (18) est incliné de telle sorte qu'il s'étend vers l'arrière et vers le haut, vu depuis l'appareil de conditionnement (14).

10. Dispositif de récolte selon l'une quelconque des revendications 1 à 9, **caractérisé en ce que** l'appareil de transport transversal (18) est incliné de telle sorte qu'il s'étend vers l'arrière, vu dans la direction de transport de l'appareil de transport transversal (18).

11. Machine de récolte agricole,
avec un véhicule tracteur,
avec au moins un dispositif de récolte (10) selon l'une quelconque des revendications 1 à 10, couplé au véhicule tracteur.
